# EUROPÄISCHE PATENTANMELDUNG

(11) **EP 1 313 073 A2**
(43) Veröffentlichungstag der Anmeldung: **21.05.2003**
(21) Anmeldenummer: 02005762.6
(22) Anmeldetag: 13.03.2002
(51) Int. Cl.: G07F 19/00, H04M 17/00

(54) **Datenübertragungsverfahren und -anordnung mit Kontext-Identifikator**

(30) Priorität: 14.11.2001 EP 01127042
(71) Anmelder: Encorus Technologies GmbH, 70565 Stuttgart (DE)
(72) Erfinder: Hackett, Damian, 72070 Tübingen (DE); Schulze, Andreas, 70197 Stuttgart (DE); Ammermann, Dirk, Dr.-Ing., 70771 Leinfelden-Echterdingen (DE); Bouceka, Denis, 70439 Stuttgart (DE); Kruppa, Stephan, Dr., 70597 Stuttgart (DE); Offer, Gero, 71116 Gärtringen (DE); Männle, Manfred, Dr., 70563 Stuttgart (DE); Marra, Andreas, Dr., 70197 Stuttgart (DE); Biechele, Bernd, 70197 Stuttgart (DE); Zimmermann, Holger, 04746 Hartha (DE); Blumert, Ove, 70565 Stuttgart (DE); Blumert, Ove, 70565 Stuttgart (DE)
(74) Vertreter: Heinze, Ekkehard, Dipl.-Phys. Dr.

(57) **Zusammenfassung**

Datenübertragungsverfahren zur Übermittlung von zahlungsverkehrsrelevanten Informationen zur Bezahlung einer von einem Anbieter an einen Abnehmer verkauften Ware oder Dienstleistung unter Zugriff auf ein bei einem Kontenverwalter elektronisch verwaltetes Abnehmerkonto unter Nutzung eines Telekommunikationsnetzes, insbesondere Mobilfunknetzes, an das der Abnehmer mit einem Telekommunikations-Endgerät angeschlossen ist, wobei von dem Anbieter eine Anfrage nach einem eindeutigen Kontext-Identifikator zur temporären oder permanenten, transaktionsübergreifenden Kennzeichnung einer von ihm angebotenen Ware oder Dienstleistung, insbesondere einer Mehrzahl von Waren und/oder Dienstleistungen, an einen Systemverwaltungsserver gerichtet, von dem Systemverwaltungsserver ein Kontext-Identifikator oder eine Bestätigung eines extern erzeugten Kontext-Identifikators generiert und dem anfragenden Anbieter zugesandt, der Kontext-Identifikator an den Abnehmer übermittelt und von dem Abnehmer über das Telekommunikationsnetz in Zuordnung zu dem Kontext-Identifikator Autorisierungsdaten zur Autorisierung der Bezahlung an den Kontenverwalter übermittelt werden.

## Beschreibung

Die Erfindung betrifft ein Datenübertragungsverfahren zur Übermittlung von zahlungsverkehrsrelevanten Informationen nach dem Oberbegriff des Anspruchs 1 sowie eine zur Durchführung dieses Verfahrens geeignete Anordnung.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Informationen, Musik, Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch verbreiteste Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventionelle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken. Ein großes Problem der bisher bekannten Verfahren dieser Art besteht in ihrer mangelnden "Passfähigkeit" für die etablierten Abwicklungsverfahren im Geldverkehr zwischen Kunden und Händlern, ihren Banken und ggf. den Betreibern von Kreditkartensystemen.

Der Erfindung liegt daher die Aufgabe zugrunde, ein Verfahren und eine Anordnung zur vereinfachten Abwicklung von Zahlungsverkehr unter Nutzung eines Telekommunikationsnetzes anzugeben, welches den in verschiedenen Ländern bestehenden gesetzlichen Vorschriften und etablierten und bewährten Verfahrensabläufen des Geldverkehrs Rechnung trägt.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 15.

Die Erfindung schließt den wesentlichen Gedanken ein, ein weitgehend universelles Zahlungsverfahren auf der Grundlage eines herkömmlichen Bankkontos ("Postpaid") oder elektronischen Guthabens ("Prepaid") anzugeben, welches insbesondere für eine Zahlungsabwicklung im sogenannten B2C(Business-to-Consumer)-Bereich wie auch im P2P(Person-to-Person)-Bereich anwendbar ist, also den Einkauf in realen und virtuellen Geschäften, die Bezahlung in gastronomischen oder kulturellen Einrichtungen etc. und die "Übersendung" von Geldbeträgen im privaten Bereich ermöglicht.

Sie schließt weiter den Gedanken ein, hierzu die Möglichkeiten eines TK-Netzes zu nutzen, und zwar insbesondere die Möglichkeit einer weitgehenden Abwicklung in nahezu Echtzeit (Real Time). Weiter gehört zur Erfindung der zentrale Gedanke der Bereitstellung und Verwendung einer eindeutigen Kennung - des Kontext-Identifikators - zur transaktionsübergreifenden Kennzeichnung von durch einen Anbieter offerierten Waren oder Dienstleistungen (insbesondere eines ganzen "Warenkorbes") für die Abwicklung aller mit dem Anbieten und Bezahlen verbundenen Datenübertragungs- und -verarbeitungsvorgänge, insbesondere die verlässliche Autorisierung der Bezahlung.

In einer ersten Ausführungsvariante der Erfindung wird mit der Generierung des Kontext-Identifikators keine Gültigkeitsdauer festgelegt, so dass er potentiell unbegrenzt gültig ist. Hierfür kann der Begriff "statische OfferID" gebraucht werden. Sie wird insbesondere für die Bezahlung von über Fernsehkanäle angebotenen Waren bzw. Dienstleistungen ("TV Shopping") sowie für die an Ausgabeautomaten (Vending Machines = VM) angebotenen Produkte über ein TK-Netz unter Einsatz eines TK-Endgerätes genutzt werden.

In einer alternativen Ausführung der Erfindung wird mit der Generierung des Kontext-Identifikators eine Gültigkeitsdauer definiert und er bei deren Ablauf automatisch ungültig gemacht. Hierbei kann man von einer "dynamischen OfferID" sprechen. Sie wird für verschiedene sonstige Einkaufs- und Bezahlvorgänge genutzt werden, insbesondere für einzelne Einkaufsaktionen in virtuellen Shops oder realen Länden bzw. Kaufhäusern.

In beiden Fällen kann der Kontext-Identifikator auf Anforderung des Anbieters der Waren oder Dienstleistungen gelöscht bzw. zerstört werden. Zum Ungültigmachen des Kontext-Identifikators wird bei Ablauf der Gültigkeitsdauer oder auf Anforderung des Anbieters ein Eliminierungssignal an den Anbieter gesandt, um diesen auf das Ungültigwerden des fraglichen Identifikators hinzuweisen.

Die Informationsübertragung des Kontext-Identifikators an den - potentiellen - Abnehmer bzw. Kunden (Customer) erfolgt in einer ersten Variante als invariante optische Anzeige, insbesondere Beschriftung auf einem Schaufensterdisplay oder Ausgabeautomaten oder Aufdruck auf einem Prospekt oder Katalog oder dergleichen. In anderen Varianten erfolgt die Übermittlung des Kontext-Identifikators an potentielle Abnehmer als variable optische Anzeige auf einer elektrooptischen Anzeigeeinrichtung oder durch Sprachausgabe oder ein akustisches Signal. Mit diesen verschiedenen Übermittlungsarten wird den spezifischen Einkaufssituationen der Industriegesellschaft Rechnung getragen, wo neben den traditionellen Ladeneinkauf und die insbesondere als Getränke-, Zigaretten- und Süßigkeitenautomaten etablierten Ausgabeautomaten längst das Internet-Shopping und TV-Shopping getreten ist.

Für die Mehrzahl der bestehenden Vertriebskanäle ist es von Vorteil, wenn der Kontext-Identifikator in einem Broadcast-Verfahren außerhalb des Telekommunikationsnetzes, insbesondere durch Rundfunk- oder Fernsehübertragung oder Versand bzw. Verteilung von Druckschriften oder E-Mail-Broadcast, während der Gültigkeitsdauer an eine Vielzahl potentieller Abnehmer übermittelt wird. In letzter Zeit haben aber die unmittelbar über ein Telekommunikationsnetz angebotenen Möglichkeiten zum Bezug von Waren oder Dienstleistungen (Informationen!) erheblich an Bedeutung gewonnen. Hierfür ist eine Variante von Vorteil, bei der der Kontext-Identifikator, insbesondere in einem Broadcast-Verfahren, in einer Kurznachricht oder per WAP über das Telekommunikationsnetz an das Telekommunikations-Endgerät des Abnehmers übermittelt und dort angezeigt wird.

Bevorzugt laufen die Schritte der Anfrage nach einem Kontext-Identifikator durch den Anbieter und der Zusendung eines solchen an den Anbieter bzw. Händler (Merchant) als im wesentlichen automatisierte Datenübertragungen zwischen dem Systemverwaltungsserver und einem Händler-Server oder Anbieter-Datenendgerät über ein Daten- und/oder Telekommunikationsnetz, insbesondere das Internet, ab. Dies gilt sowohl für das Internet-Shopping als auch bei der Inanspruchnahme des vorgeschlagenen Systems durch "klassische" Handelseinrichtungen.

In einem typischen Szenario wird nach dem Schritt der Übermittlung des Kontext-Identifikators an den Abnehmer der Kontext-Identifikator durch den Abnehmer über das Telekommunikationsnetz an einen Kunden-Server des Netzbetreibers oder eines Dienstanbieters im Telekommunikationsnetz übermittelt, durch den Kunden-Server, Dienstserver oder Händler-Server eine Anfragenachricht zur Einholung eines verbindlichen Angebots an den Anbieter gesandt, durch den Anbieter ein Angebotsdatensatz an den Kunden-Server übersandt und der Angebotsdatensatz vom Kunden-Server an das Telekommunikations-Endgerät des potentiellen Abnehmers übermittelt und dort im Rahmen einer Menüführung zur Bestätigung der Transaktion angezeigt. Hierbei wird die Datenübertragung in den Schritten der Anfrage nach einem verbindlichen Angebot und der Übersendung der Angebotsdaten über den Systemverwaltungsserver ausgeführt, welcher insbesondere Such- und Routing-Funktionen zwischen Netzbetreiber bzw. Dienstanbieter und Anbieter ausführt.

Der Kontext-Identifikator (OfferID) kann vollständig durch einen geeigneten Generator bei einem Systemverwaltungsserver des vorgeschlagenen Systems generiert werden, er kann aber alternativ auch vollständig extern erzeugt und im Rahmen der Anfrage durch den Anbieter zur Bestätigung an den Systemverwaltungsserver übermittelt werden. Insbesondere für "Kataloganbieter" ist eine Variante von Vorteil, bei der der Kontext-Identifikator einen ersten und einen zweiten Abschnitt aufweist, wobei der erste Abschnitt ein durch den Systemverwaltungsserver generierter oder verwalteter Anbieter-Identifikator und der zweite Abschnitt ein durch den Anbieter generierter oder verwalteter Waren- oder Warengruppen-Identifikator ist und das Verfahren eine Übermittlung des zweiten Abschnitts an den Systemverwaltungsserver, die Verknüpfung von erstem und zweitem Abschnitt im Systemverwaltungsserver und die Zusendung oder Bestätigung des gesamten Kontext-Identifikators an den Abnehmer bzw. diesem gegenüber umfasst.

Dem Anbieter können somit gewissermaßen "Nummernbänder" zugeordnet werden, wobei er seine eigene Katalognummer hinter einem seine Identität als Anbieter repräsentierenden Abschnitt ("Präfix") weiterhin benutzt. Hierdurch lässt sich die Verwendung von Kontext-Identifikatoren bei Katalog-Szenarien wesentlich vereinfachen. Die Kombination des ersten Abschnitts (Präfix) mit dem zweiten Abschnitt (Katalognummer) kann - nach Vergabe des Präfix durch die Systemverwaltung - auch durch den Anbieter selbst erfolgen, wobei die Verantwortung für die Eindeutigkeit des Kontext-Identifikators dann natürlich bei diesem liegt.

Üblicherweise wird der über den Kontext-Identifikator informierte Abnehmer diesen an seinem Telekommunikationsendgerät manuell oder ggf. auch per Spracheingabe selbst eingeben. Die oben erwähnten Möglichkeiten der Ausgabe des Identifikators an den Abnehmer können aber in einen automatischen Eingabevorgang münden, der natürlich fehlerresistenter als die manuelle Eingabe ist. Der Identifikator wird hierzu in oder an einem Telekommunikationsendgerät, insbesondere durch eine mit diesem verbundene Kamera oder einen Scanner, des Abnehmers aus einem optischen oder akustischen Signal in ein elektrisches Signal umgewandelt.

Die wesentlichen erfindungsgemäßen Vorrichtungsaspekte und ihre vorteilhaften Fortbildungen ergeben sich weitgehend bereits aus den oben erläuterten Verfahrensaspekten in ihrer Abbildung auf eine Systemstruktur, so dass sie hier nicht nochmals im einzelnen erläutert werden.

In organisatorischer Hinsicht ist das vorgeschlagene System in einer Mehrzahl verschiedener Konfigurationen realisierbar, wobei es technisch grundsätzlich um einen Systemverwaltungsserver zentriert ist, dem im Normalfall ein Kunden-Server (nachfolgend auch Valid Server) sowie ein Händler-Server (Payment Server) zugeordnet und mit dem diese durch Nachrichtenübertragungskanäle verbunden sind. Wenn in diesem Zusammenhang von "einem" Händler- bzw. Kunden-Server die Rede ist, so ist hierunter im folgenden jeweils auch eine Mehrzahl von Servern verschiedener Dienstanbieter, Geldinstitute etc. zu verstehen, die im Gesamtsystem eine entsprechende Funktion haben.

In einer ersten Systemgestaltung befinden sich sämtliche genannten Server bei einem Telekommunikationsunternehmen bzw. kundenorientierten Dienstanbieter, welcher sowohl Anbieter als auch Abnehmer an das System anbindet. In einer zweiten Systemkonfiguration betreibt das Telekommunikationsunternehmen (nachfolgend auch als abgekürzt als Telco) bzw. der Kunden-Dienstanbieter zwar Kunden- und Händler-Server, der Systemverwaltungsserver wird jedoch von einem getrennten Unternehmen (nachfolgend auch als Opco bezeichnet) betrieben und im wesentlichen nur für die Generierung des Kontext-Identifikators sowie die laufende Ermittlung des zuständigen Händler-Servers benötigt. Die relevanten Informationen zur Zuordnung der für eine bestimmte Transaktion zuständigen Händler- und Kunden-Server liegen hierbei insbesondere beim Systemverwaltungsserver.

In einer dritten Konfiguration gibt es separate Kunden- und Händler-Dienstanbieter, die jeweils auch nur den zugehörigen Server betreiben, während das Systembetriebsunternehmen (Opco) den Systemverwaltungsserver betreibt. Hierbei ist ein erstes Szenario denkbar, bei dem (wie bei der vorgenannten Variante) der Systemverwaltungsserver im wesentlichen nur den Kontext-Identifikator erzeugt oder bestätigt und zum späteren Auffinden des Händler-Servers dient. In einem zweiten Szenario trägt der Systemverwaltungsserver verarbeitungs- wie übermittlungstechnisch im wesentlichen die Transaktion. Schließlich ist auch eine Systemkonfiguration sinnvoll, bei der das Betriebsunternehmen sowohl den Systemverwaltungsserver als auch den Händler-Server betreibt, während lediglich Kunden-Server durch das Telco bzw. den Kunden-Dienstanbieter betrieben werden.

Die zweite und dritte der oben genannten Systemkonfigurationen, wo es ein selbstständiges Systemverwaltungsunternehmen und somit eine sogenannte "Opco-Domäne" gibt, sind vorteilhaft für die Realisierung eines sehr großen, insbesondere globalen, Systems mit Anbindung sehr vieler Anbieter und Abnehmer. Sie ermöglichen nämlich eine zentrale Datenhaltung der relevanten Daten (OfferID und Serveradressen) sehr vieler Nutzer, die über eine Vielzahl von Händler-Servern und/oder Kunden-Servern elektronische Transaktionen abwickeln.

Zur Realisierung einer seiner wichtigsten Funktionen hat der Systemverwaltungsserver eine Codeerzeugereinheit zur Generierung des Kontext-Identifikators im Ansprechen auf eine empfangene Anfrage und eine Codesendeeinrichtung zur Übersendung des generierten Kontext-Identifikators direkt oder mittelbar an das anfragende Anbieter-Endgerät. In einer Modifikation zu einer oben bereits erwähnten speziellen Verfahrensführung ("Kataloganbieter") dient die Codeerzeugereinheit lediglich zur Erzeugung eines ersten Identifikator-Abschnittes, der einen Anbieter kennzeichnet, und in einer weiteren Abwandlung sind statt der Codeerzeugereinheit Mittel zum Empfang und zur Eindeutigkeitsprüfung eines extern generierten Codes sowie zur Ausgabe eines Bestätigungssignals zur Bestätigung der Eindeutigkeit (und damit Brauchbarkeit) einer fremderzeugten OfferID vorgesehen.

Speziell zur Erzeugung und Handhabung der oben erwähnten dynamischen OfferID hat der Systemverwaltungsserver der Codeerzeugereinheit zugeordnete Zeitgebermittel und Zeitdauer-Speichermittel zur Zuordnung und Speicherung einer Gültigkeitsdauer zu jedem Kontext-Identifikator sowie eine mit den Zeitgeber- und Zeit-Speichermitteln verbundene Zeitdauer-Vergleichereinheit zur Überwachung des Ablaufes einer festgelegten Gültigkeitsdauer und zur Ausgabe eines Eliminierungssignals zum Ungültigmachen des Kontext-Identifikators bei Ablauf aufweist. Es versteht sich, dass im Falle der Verwendung statischer OfferIDs an die Stelle dieser Komponenten eine Löscheinheit tritt, die auf eine von extern erhaltene Löschanforderung anspricht und den Identifikator eliminiert.

Eine wesentliche Funktionskomponente der vorgeschlagenen Systemarchitektur stellt weiterhin ein Datenhaltungssystem (OfferID Repository) zur Speicherung und Verwaltung aller gültigen Kontext-Identifikatoren und von diesen im System zugeordneten Informationen, insbesondere zahlungsverkehrsrelevanten Daten und Kennzeichnungen stattgefundener Datenübertragungsvorgänge, dar. Mit dessen Hilfe lassen sich beispielsweise für jede Transaktion die zuständigen Kunden- bzw. Händler-Server ermitteln. Die im vorangehenden Absatz erwähnten und dort dem Systemverwaltungsserver zugeschriebenen Komponenten zur Verwaltung dynamischer OfferIDs können auch dem Repository zugeschrieben werden.

Vorteile und Zweckmäßigkeiten der Erfindung ergeben sich im übrigen aus den abhängigen Ansprüchen sowie den anhängenden Figuren in Verbindung mit der nachfolgenden kurzen Beschreibung derselben.

Von den Figuren zeigen:
Fig. 1 eine schematische Übersichtsdarstellung wesentlicher Komponenten bzw. Schichten sowie Prozessabläufe eines erfindungsgemäßen Systems,
Fig. 2A bis 2C eine schematische Ablaufdarstellung (Sequence Diagram) sowie eine Liste der Schrittfolge einer Ausführungsform des erfindungsgemäßen Verfahrens (Web-WAP-Szenario),
Fig. 3A bis 3C eine schematische Ablaufdarstellung (Sequence Diagram) sowie eine Liste der Schrittfolge einer weiteren Ausführungsform des erfindungsgemäßen Verfahrens (WAP-WAP-Szenario),
Fig. 4A bis 4C eine schematische Ablaufdarstellung (Sequence Diagram) sowie eine Liste der Schrittfolge einer weiteren Ausführungsform des erfindungsgemäßen Verfahrens (Push-Fall-Back-Szenario),
Fig. 5A und 5B eine schematische Ablaufdarstellung (Sequence Diagram) sowie eine Liste der Schrittfolge bei der Erzeugung einer statischen OfferID im Kontext eines Ausgabeautomaten/TV-Shopping-Szenarios,
Fig. 6A und 6B eine schematische Ablaufdarstellung (Sequence Diagram) sowie eine Liste der Schrittfolge bei der Löschung einer statischen OfferID im gleichen Kontext,
Fig. 7A bis 7C eine schematische Ablaufdarstellung (Sequence Diagram) sowie eine Liste der Schrittfolge einer weiteren Ausführungsform des erfindungsgemäßen Verfahrens (Ausgabeautomaten/TV-Shopping-Szenario),
Fig. 8A und 8B ein schematisches Ablaufdiagramm (Sequence Diagram) sowie eine Liste von Schritten beim Ablauf einer Clearing-Prozedur bei der Transaktion größerer Geldbeträge (Makro Payment) und
Fig. 9A bis 9C eine schematische Ablaufdarstellung (Sequence Diagram) sowie eine Liste der Schrittfolge einer weiteren Ausführungsform des erfindungsgemäßen Verfahrens (Micro-Payment-Szenario mit "stored Value Accounts").

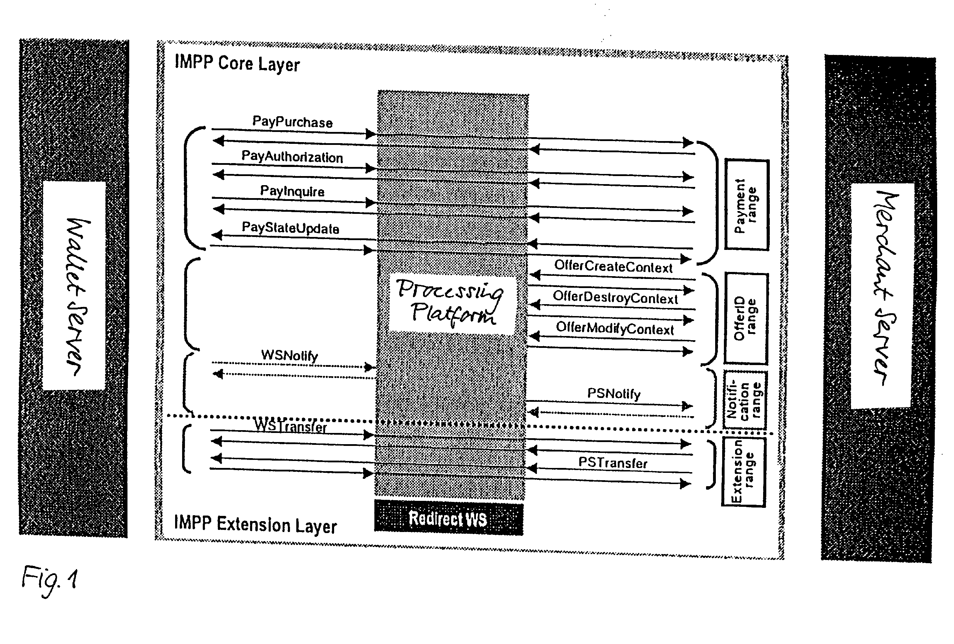

In Fig. 1 sind schematisch die verschiedenen Schichten eines interoperablen Mobile-Payment-Protokolls IMPP gezeigt, welches zwischen einem Händler-Server (Merchant Server) und einem Kunden-Server (Wallet Server) auf einer Verarbeitungsplattform (Processing Platform) abläuft. Grundsätzlich hat das Protokoll eine Kern- bzw. Basisschicht (IMPP Core Layer) und eine Erweiterungsschicht (IMPP Extension Layer), wobei zur ersteren der eigentliche Zahlungsverkehrsbereich (Payment range), der Kontext-Identifikator-Bereich (OfferID range) und der Benachrichtungsbereich (Notification range) gehören. Die Erweiterungsschicht umfasst optionale Anfragen und Antworten zwischen den Kunden- und Händler-Serverinstanzen. Sie ermöglicht auch eine kommunikative Anbindung von dritten Kunden-Servern. Die Kommunikation zwischen Abnehmer und Kunden-Server einerseits sowie Anbieter und Händler-Server andererseits liegt außerhalb dieses Protokolls.

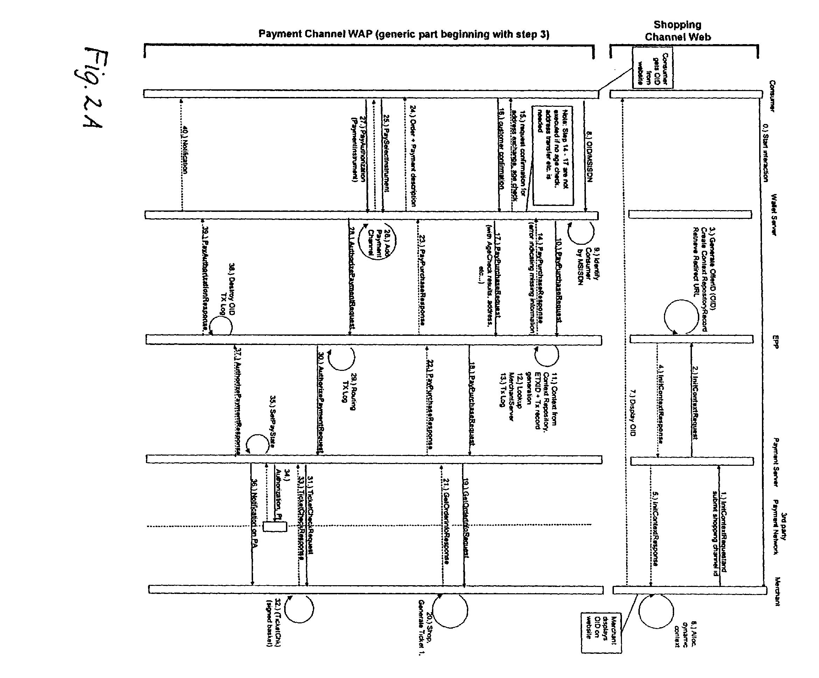

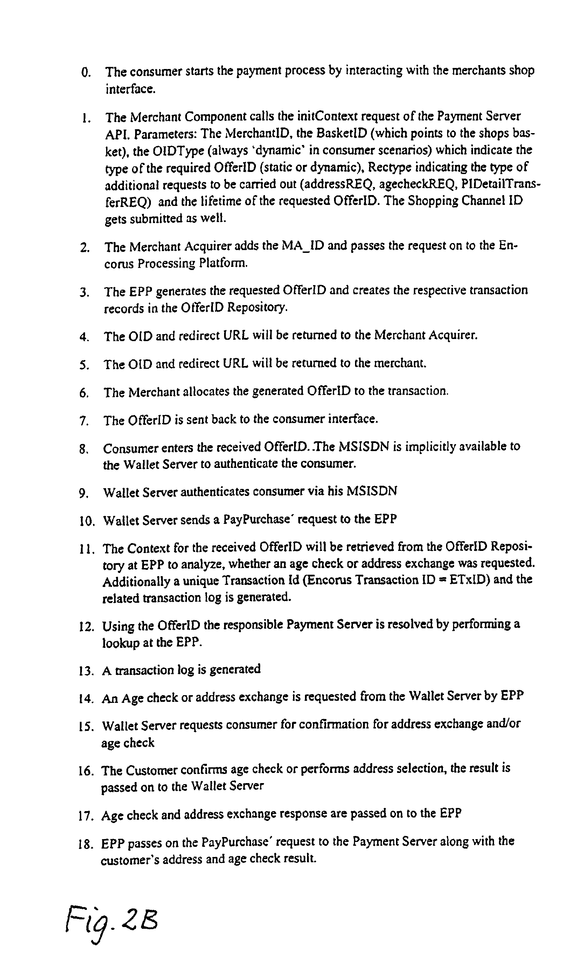

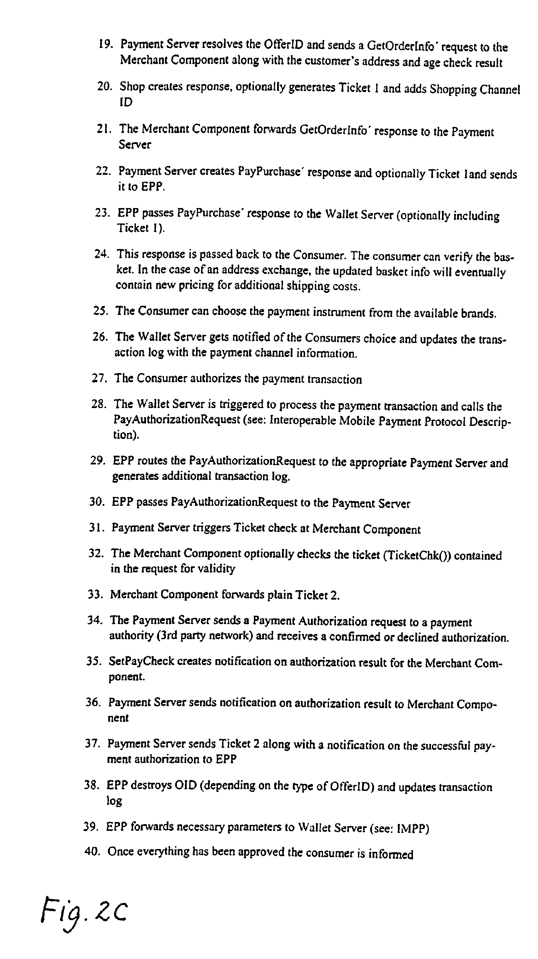

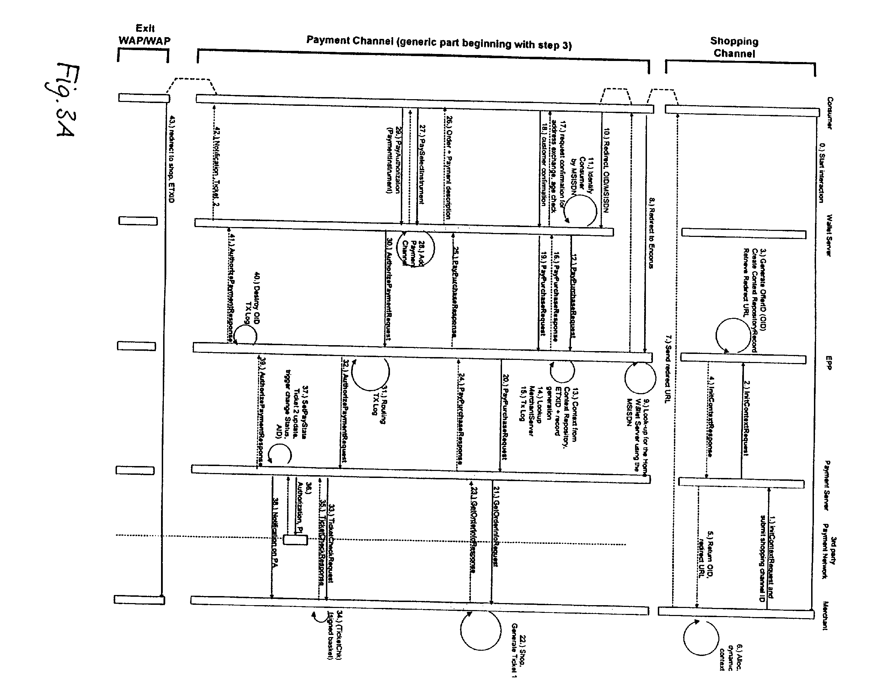

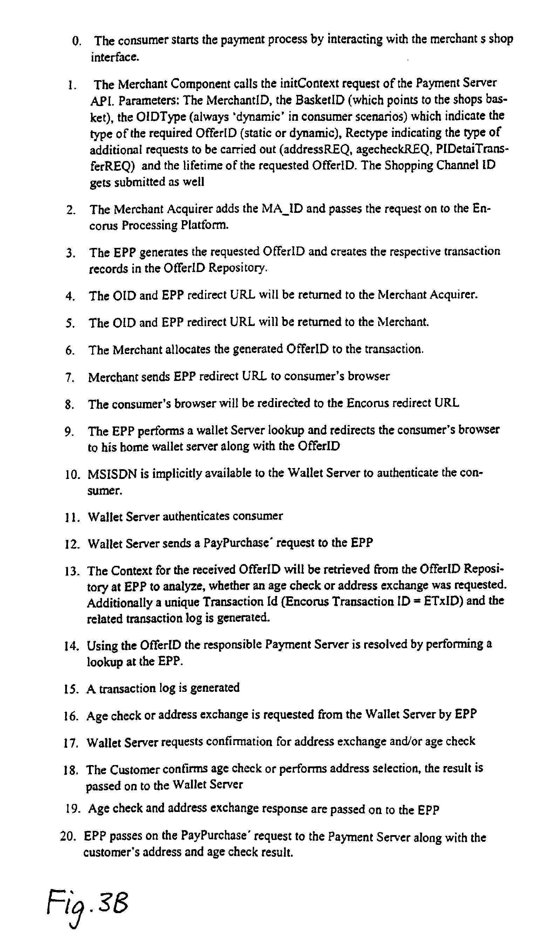

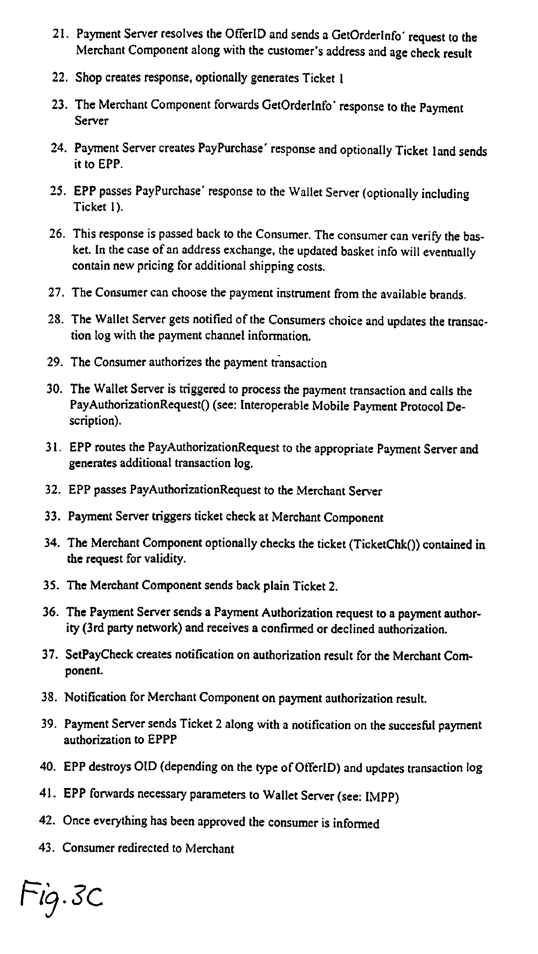

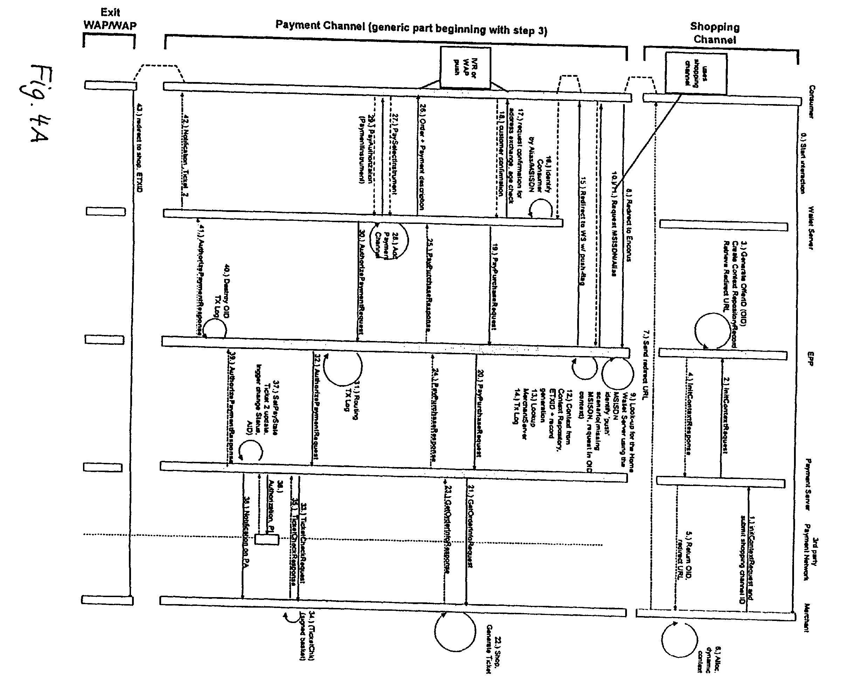

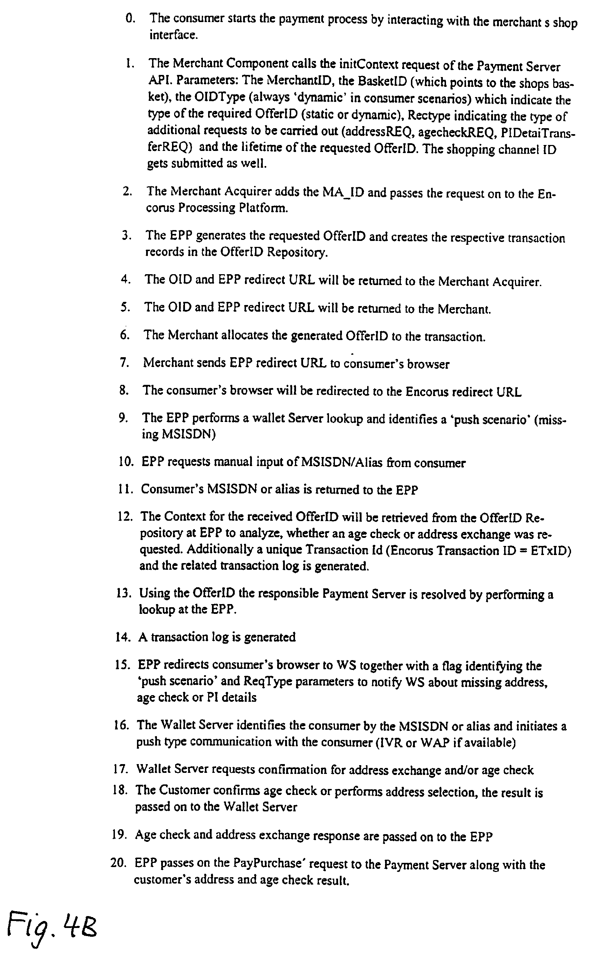

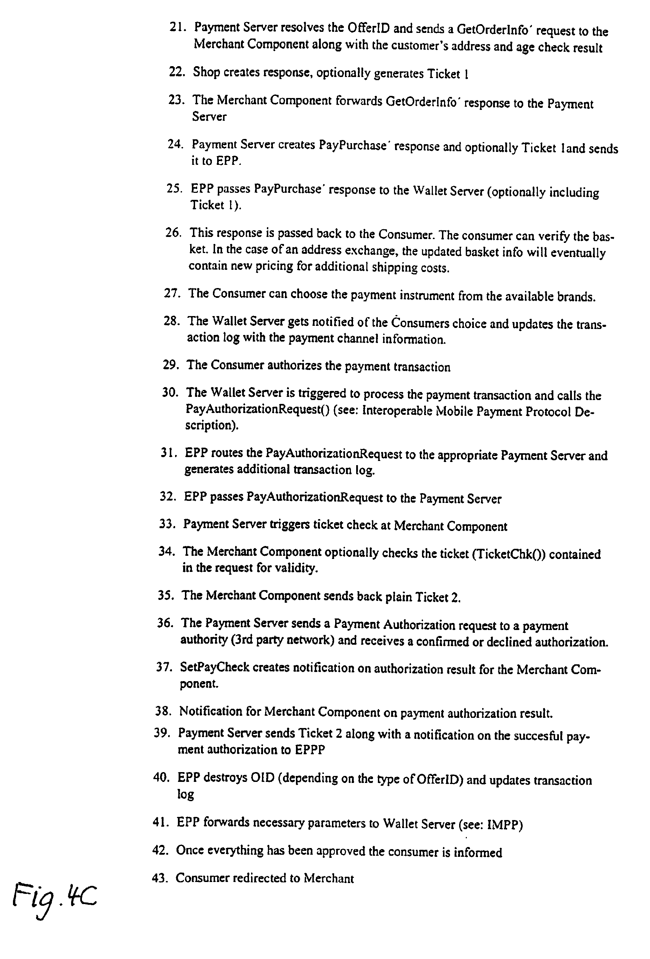

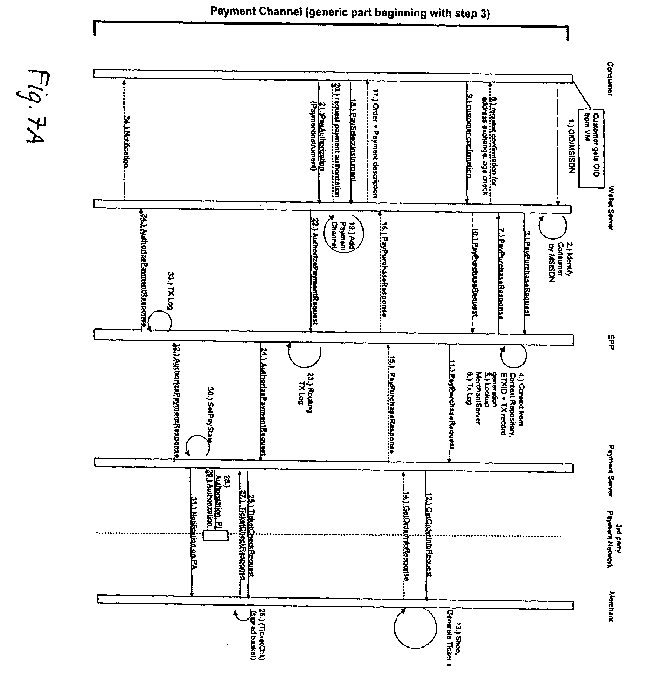

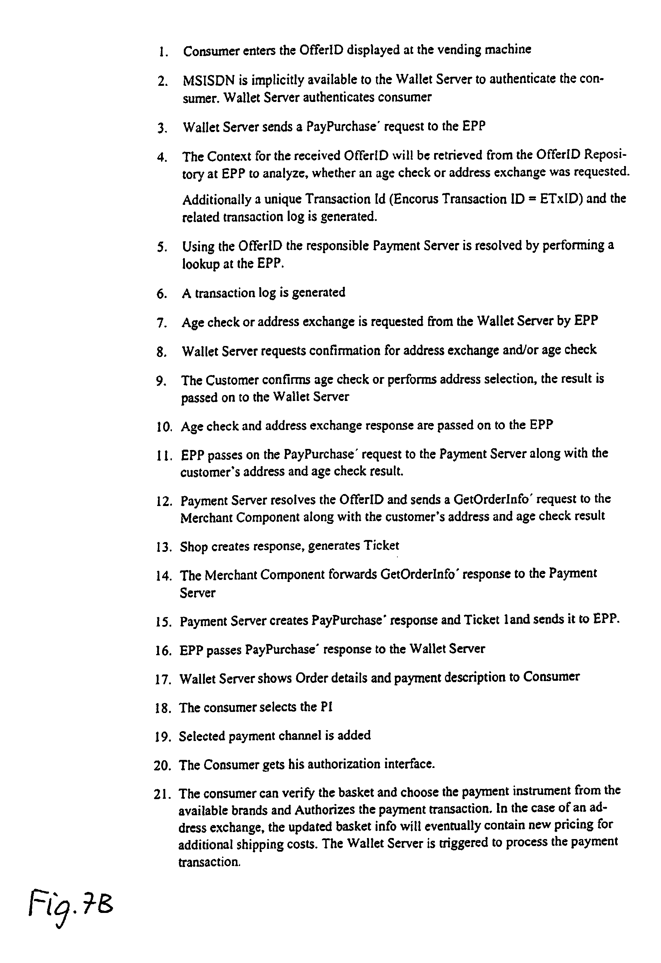

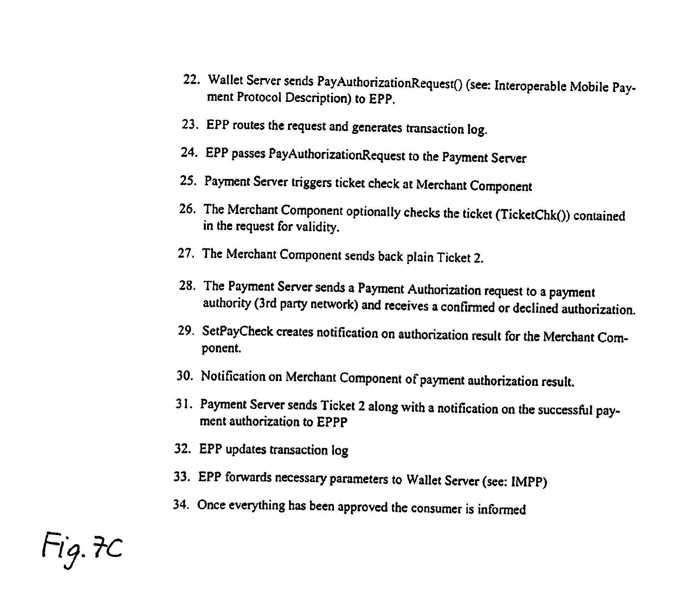

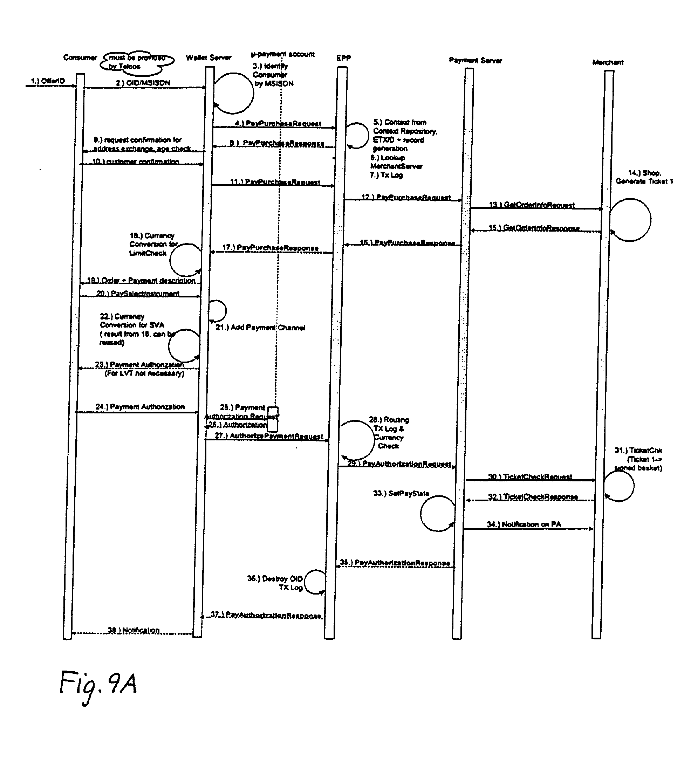

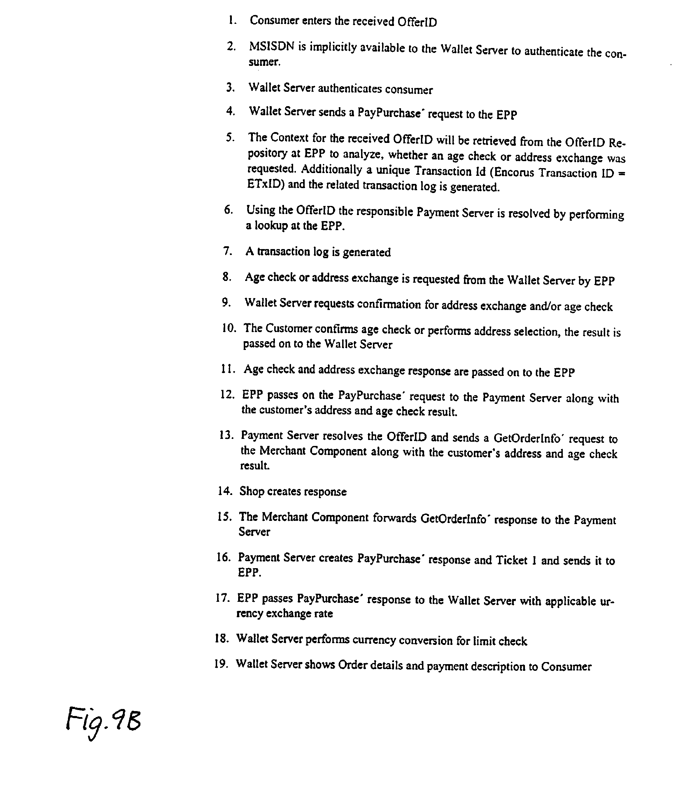

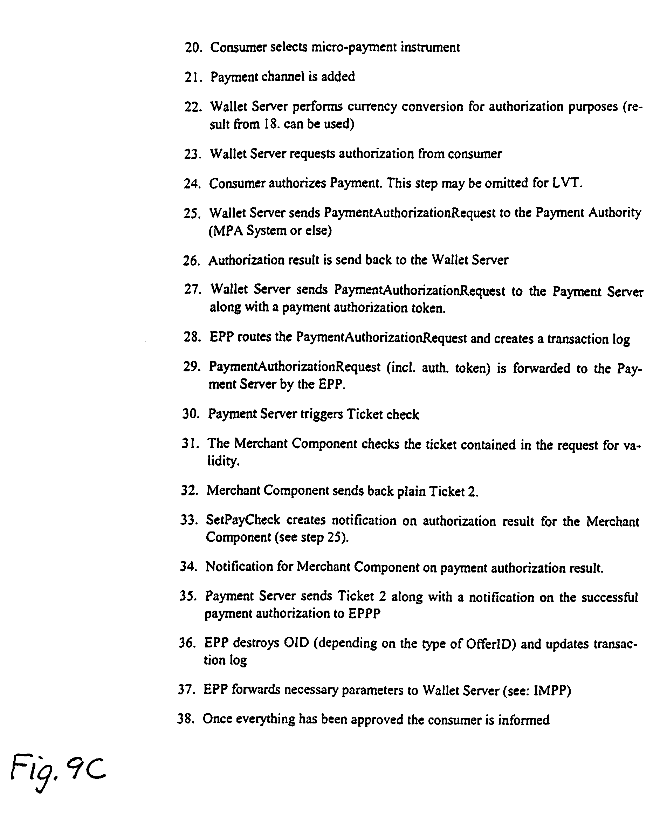

Die Ablaufdiagramme und Verfahrensschritt-Listen der Figuren 2A bis 2C, 3A bis 3C, 4A bis 4C, 7A bis 7C und 9A bis 9C für wesentliche Typen von Transaktionen bzw. Bezahlvorgängen sind selbsterklärend.

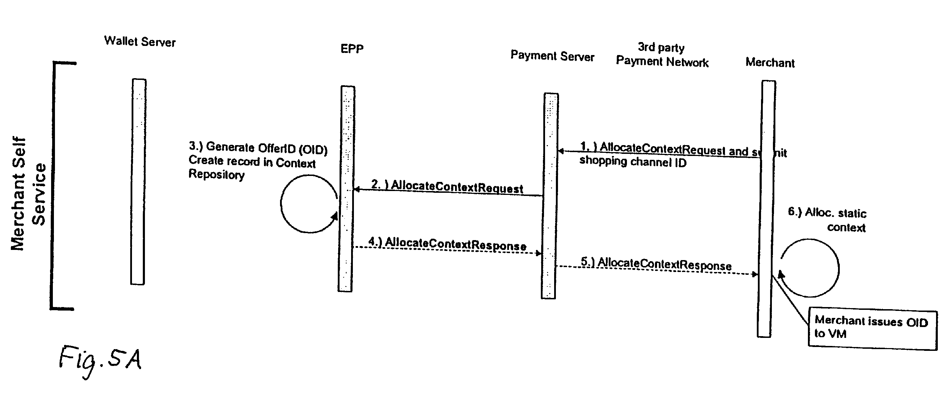

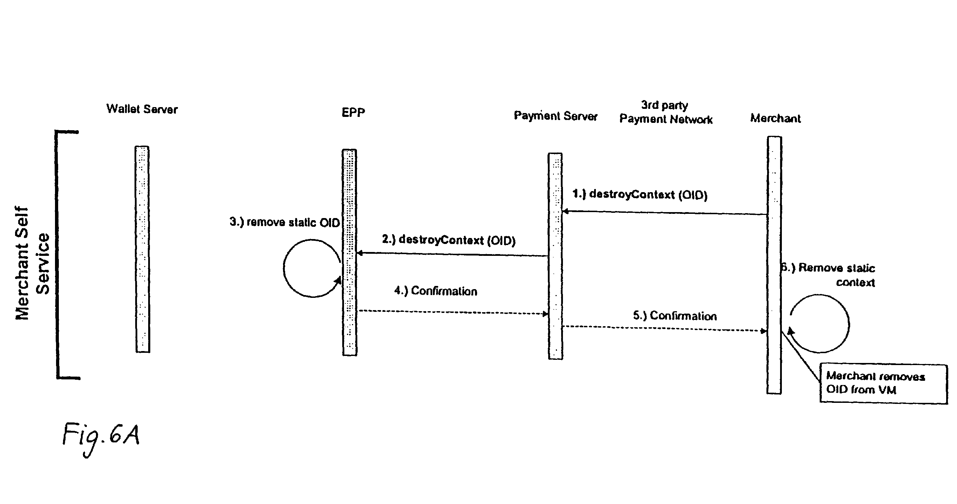

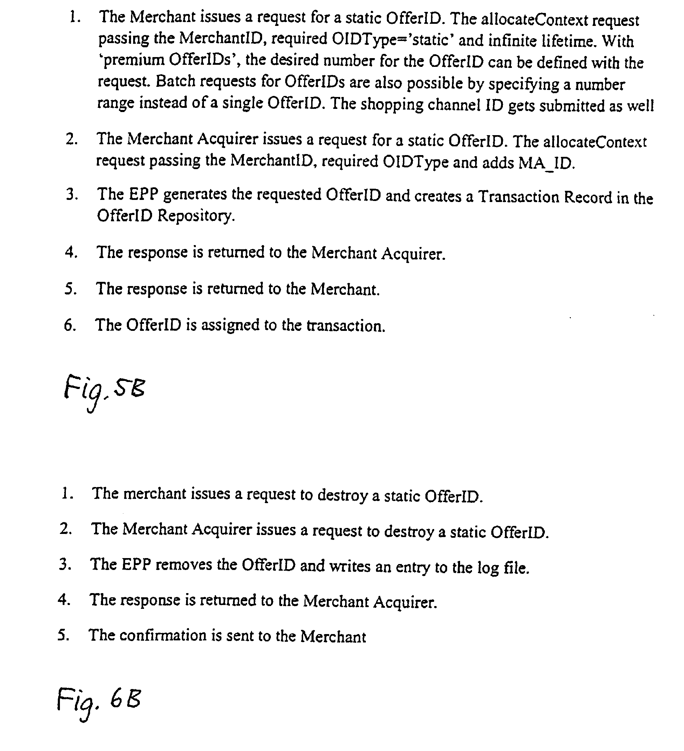

Dies gilt auch für die in Fig. 5A und 5B sowie 6A und 6B dargestellten Abläufe bei der Erzeugung und der Löschung bzw. Zerstörung einer statischen OfferID. Hierzu wird insbesondere auch auf die weiter oben gegebene allgemeine Erläuterung zur Handhabung des Kontext-Identifikators hingewiesen.

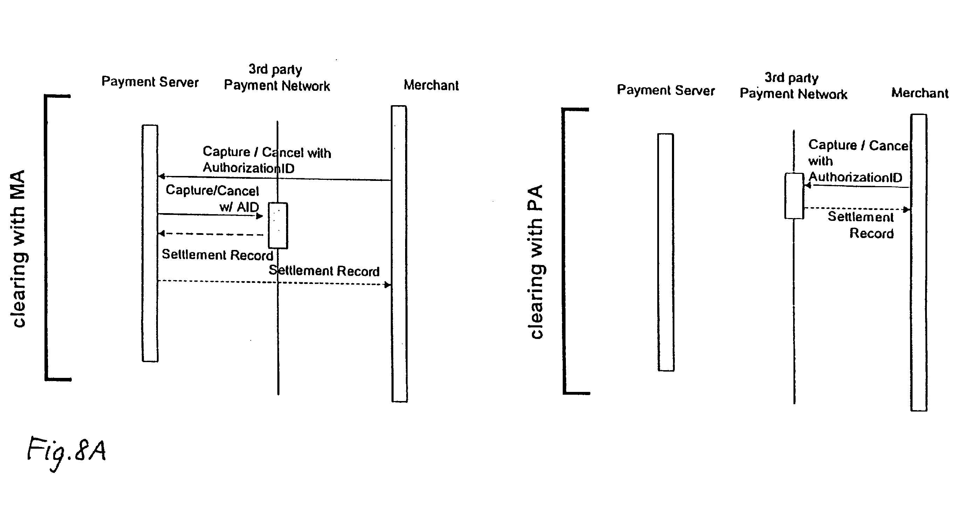

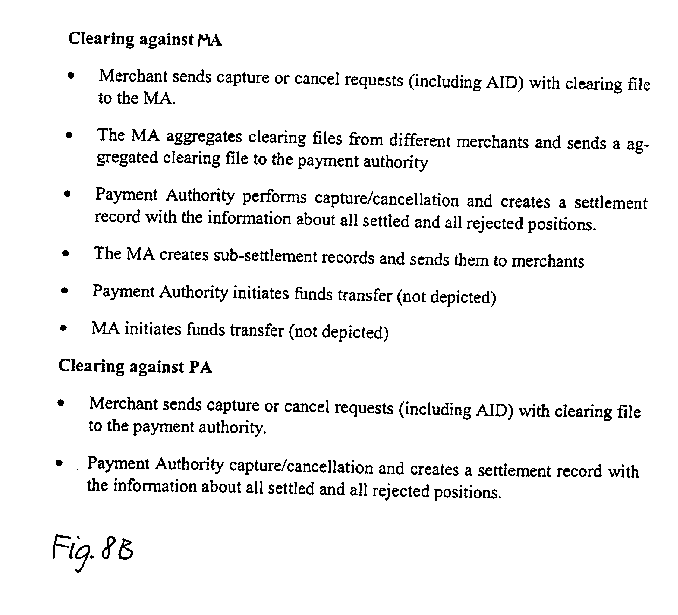

Die in Fig. 8A und 8B dargestellten Schritte und Aspekte eines Clearing-Ablaufes sind davon abhängig, ob ein sogenannter Merchant Acquirer involviert ist oder nicht. Sie folgen den organisatorischen Geflogenheiten etablierter Clearing-Prozeduren im herkömmlichen Geldverkehr.

Die Ausführung der Erfindung ist nicht auf die oben dargestellten Beispiele und hervorgehobenen Aspekte beschränkt, sondern ebenso in einer Vielzahl von Abwandlungen möglich, die im Rahmen fachgemäßen Handelns liegen. Es versteht sich insbesondere, dass das beschriebene Verfahren und System weitgehend durch spezifische Software und Schnittstellenspezifikationen realisiert wird, aber vielfältige Kombinationen aus Soft- und Hardwarelösungen ebenfalls im Bereich der Erfindung liegen.

## Patentansprüche

1. Datenübertragungsverfahren zur Übermittlung von zahlungsverkehrsrelevanten Informationen zur Bezahlung einer von einem Anbieter an einen Abnehmer verkauften Ware oder Dienstleistung unter Zugriff auf ein bei einem Kontenverwalter elektronisch verwaltetes Abnehmerkonto unter Nutzung eines Telekommunikationsnetzes, insbesondere Mobilfunknetzes, an das der Abnehmer mit einem Telekommunikations-Endgerät angeschlossen ist,
**dadurch gekennzeichnet, dass**
von dem Anbieter eine Anfrage nach einem eindeutigen Kontext-Identifikator zur temporären oder permanenten, transaktionsübergreifenden Kennzeichnung einer von ihm angebotenen Ware oder Dienstleistung, insbesondere einer Mehrzahl von Waren und/oder Dienstleistungen, an einen Systemverwaltungsserver gerichtet,
von dem Systemverwaltungsserver ein Kontext-Identifikator oder eine Bestätigung eines extern erzeugten Kontext-Identifikators generiert und dem anfragenden Anbieter zugesandt,
der Kontext-Identifikator an den Abnehmer übermittelt und
von dem Abnehmer über das Telekommunikationsnetz in Zuordnung zu dem Kontext-Identifikator Autorisierungsdaten zur Autorisierung der Bezahlung an den Kontenverwalter übermittelt werden.

2. Datenübertragungsverfahren nach Anspruch 1,
**dadurch gekennzeichnet, dass**
mit der Generierung des Kontext-Identifikators keine Gültigkeitsdauer festgelegt wird, so dass er potentiell unbegrenzt gültig ist.

3. Datenübertragungsverfahren nach Anspruch 1,
**dadurch gekennzeichnet, dass**
mit der Generierung des Kontext-Identifikators eine Gültigkeitsdauer definiert und er bei deren Ablauf automatisch ungültig gemacht wird.

4. Datenübertragungsverfahren nach einem der vorangehenden Ansprüche,
**dadurch gekennzeichnet, dass**
zum Ungültigmachen des Kontext-Identifikators bei Ablauf der Gültigkeitsdauer oder auf Anforderung des Anbieters ein Eliminierungssignal an den Anbieter gesandt wird.

5. Datenübertragungsverfahren nach einem der vorangehenden Ansprüche,
**dadurch gekennzeichnet, dass**
die Übermittlung des Kontext-Identifikators an potentielle Abnehmer als invariante optische Anzeige, insbesondere Beschriftung auf einem Schaufensterdisplay oder Ausgabeautomaten oder Aufdruck auf einem Prospekt oder Katalog oder dergleichen, erfolgt.

6. Datenübertragungsverfahren nach einem der Ansprüche 1 bis 4,
**dadurch gekennzeichnet, dass**
die Übermittlung des Kontext-Identifikators an potentielle Abnehmer als variable optische Anzeige auf einer elektrooptischen Anzeigeeinrichtung oder durch Sprachausgabe oder ein akustisches Signal erfolgt.

7. Datenübertragungsverfahren nach einem der vorangehenden Ansprüche,
**dadurch gekennzeichnet, dass**
der Kontext-Identifikator in einem Broadcast-Verfahren außerhalb des Telekommunikationsnetzes, insbesondere durch Rundfunk- oder Fernsehübertragung oder Versand bzw. Verteilung von Druckschriften oder E-Mail-Broadcast, während der Gültigkeitsdauer an eine Vielzahl potentieller Abnehmer übermittelt wird.

8. Datenübertragungsverfahren nach einem der Ansprüche 1 bis 6,
**dadurch gekennzeichnet, dass**
der Kontext-Identifikator, insbesondere in einem Broadcast-Verfahren, in einer Kurznachricht oder per WAP über das Telekommunikationsnetz an das Telekommunikations-Endgerät des Abnehmers übermittelt und dort angezeigt wird.

9. Datenübertragungsverfahren nach einem der vorangehenden Ansprüche,
**dadurch gekennzeichnet, dass**
die Schritte der Anfrage nach einem Kontext-Identifikator durch den Anbieter und der Zusendung eines solchen an den Anbieter als im wesentlichen automatisierte Datenübertragungen zwischen dem Systemverwaltungsserver und einem Händler-Server oder Anbieter-Datenendgerät über ein Daten- und/oder Telekommunikationsnetz, insbesondere das Internet, ablaufen.

10. Datenübertragungsverfahren nach einem der vorangehenden Ansprüche,
**dadurch gekennzeichnet, dass**
nach dem Schritt der Übermittlung des Kontext-Identifikators an den Abnehmer
der Kontext-Identifikator durch den Abnehmer über das Telekommunikationsnetz an einen Kunden-Server des Netzbetreibers oder eines Dienstanbieters im Telekommunikationsnetz übermittelt,
durch den Kunden-Server, Dienstserver oder Händler-Server eine Anfragenachricht zur Einholung eines verbindlichen Angebots an den Anbieter gesandt,
durch den Anbieter ein Angebotsdatensatz an den Kunden-Server übersandt und
der Angebotsdatensatz vom Kunden-Server an das Telekommunikations-Endgerät des potentiellen Abnehmers übermittelt und dort im Rahmen einer Menüführung zur Bestätigung der Transaktion angezeigt wird.

11. Datenübertragungsverfahren nach Anspruch 10,
**dadurch gekennzeichnet, dass**
die Datenübertragung in den Schritten der Anfrage nach einem verbindlichen Angebot und der Übersendung der Angebotsdaten über den Systemverwaltungsserver ausgeführt wird, welcher insbesondere Such- und Routing-Funktionen zwischen Netzbetreiber bzw. Dienstanbieter und Anbieter ausführt.

12. Datenübertragungsverfahren nach einem der vorangehenden Ansprüche,
**dadurch gekennzeichnet, dass**
der Kontext-Identifikator vollständig extern erzeugt und im Rahmen der Anfrage durch den Anbieter zur Bestätigung an den Systemverwaltungsserver übermittelt wird.

13. Datenübertragungsverfahren nach einem der Ansprüche 1 bis 11,
**dadurch gekennzeichnet, dass**
der Kontext-Identifikator einen ersten und einen zweiten Abschnitt aufweist, wobei der erste Abschnitt ein durch den Systemverwaltungsserver generierter oder verwalteter Anbieter-Identifikator und der zweite Abschnitt ein durch den Anbieter generierter oder verwalteter Warenoder Warengruppen-Identifikator ist und das Verfahren eine Übermittlung des zweiten Abschnitts an den Systemverwaltungsserver, die Verknüpfung von erstem und zweitem Abschnitt im Systemverwaltungsserver und die Zusendung oder Bestätigung des gesamten Kontext-Identifikators an den Abnehmer bzw. diesem gegenüber umfasst.

14. Datenübertragungsverfahren nach einem der Ansprüche 10 bis 13,
**dadurch gekennzeichnet, dass**
der Kontext-Identfikator in oder an einem Telekommunikationsendgerät, insbesondere durch eine mit diesem verbundene Kamera oder einen Scanner, des Abnehmers aus einem optischen oder akustischen Signal in ein elektrisches Signal umgewandelt wird.

15. Anordnung zur Durchführung des Verfahrens nach einem der vorangehenden Ansprüche, mit
einem Systemverwaltungsserver, der zur Generierung und Übersendung des Kontext-Identifikators im Ansprechen auf eine Anfrage ausgebildet ist,
einem mit dem Systemverwaltungsserver über ein Datenund/oder Telekommunikationsnetz, insbesondere das Internet, verbundenen Anbieter-Endgerät zur Eingabe und Übersendung der Anfrage nach einem Kontext-Identifikator und zur Ausgabe eines übersandten Kontext-Identifikators, Anzeigemitteln zur Anzeige des Kontext-Identifikators für den oder die Abnehmer und
einem Telekommunikations-Endgerät, insbesondere Mobilfunk-Endgerät, zum Anschluss des Abnehmers an ein Telekommunikationsnetz zum Zugriff auf sein Abnehmerkonto.

16. Anordnung nach Anspruch 15,
**gekennzeichnet durch**
einen Kunden-Server, der eine Verbindung zwischen dem Telekommunikations-Endgerät des Abnehmers und dem Anbieter-Endgerät zur Übermittlung eines verbindlichen Angebotes, insbesondere über den Systemverwaltungsserver, herstellt.

17. Anordnung nach Anspruch 15 oder 16,
**dadurch gekennzeichnet, dass**
die Anzeigemittel als Druckschrift oder Beschriftung eines Trägers ausgebildet sind.

18. Anordnung nach Anspruch 15 oder 16,
**dadurch gekennzeichnet, dass**
die Anzeigemittel als elektrooptische Anzeigeeinrichtung, insbesondere als Display eine Telekommunikationsoder Datenendgerätes, ausgebildet sind.

19. Anordnung nach Anspruch 15 oder 16,
**dadurch gekennzeichnet, dass**
die Anzeigemittel als Sprachausgabe- oder akustische Signalgebereinrichtung ausgebildet sind.

20. Anordnung nach Anspruch 15 oder 16,
**dadurch gekennzeichnet, dass**
die Anzeigemittel als Fernseh- oder Rundfunkempfänger ausgebildet sind.

21. Anordnung nach einem der Ansprüche 15 bis 20,
**dadurch gekennzeichnet, dass**
dem Telekommunikations-Endgerät des Abnehmers eine Kamera oder ein Scanner zur selbsttätigen Erfassung eines optisch angezeigten Kontext-Identifikators zugeordnet ist oder das es zur Auswertung eines einen Kontext-Identifikator repräsentierenden akustischen Signals ausgebildet ist.

22. Anordnung nach einem der Ansprüche 15 bis 21,
**dadurch gekennzeichnet, dass**
der Systemverwaltungsserver eine Codeerzeugereinheit zur Generierung eines Kontext-Identifikators zur temporären oder permanenten, transaktionsübergreifenden eindeutigen Kennzeichnung von durch die Anbieter angebotenen Waren oder Dienstleistungen, insbesondere jeweils einer Mehrzahl von Waren und/oder Dienstleistungen, im Ansprechen auf eine empfangene Anfrage und eine Codesendeeinrichtung zur Übersendung des generierten Kontext-Identifikators direkt oder mittelbar an das anfragende Anbieter-Endgerät aufweist.

23. Anordnung nach Anspruch 22,
**dadurch gekennzeichnet, dass**
der Systemverwaltungsserver der Codeerzeugereinheit zugeordnete Zeitgebermittel und Zeitdauer-Speichermittel zur Zuordnung und Speicherung einer Gültigkeitsdauer zu jedem Kontext-Identifikator sowie eine mit den Zeitgeber- und Zeit-Speichermitteln verbundene Zeitdauer-Vergleichereinheit zur Überwachung des Ablaufes einer festgelegten Gültigkeitsdauer und zur Ausgabe eines Eliminierungssignals zum Ungültigmachen des Kontext-Identifikators bei Ablauf aufweist.

24. Anordnung nach einem der Ansprüche 15 bis 23,
**dadurch gekennzeichnet, dass**
dem Systemverwaltungsserver ein Datenhaltungssystem zur Speicherung und Verwaltung aller gültigen Kontext-Identifikatoren und von diesen im System zugeordneten Informationen, insbesondere zahlungsverkehrsrelevanten Daten und Kennzeichnungen stattgefundener Datenübertragungsvorgänge, zugeordnet ist.
